# EUROPÄISCHE PATENTANMELDUNG

(11) **EP 1 936 570 A1**
(43) Veröffentlichungstag der Anmeldung: **25.06.2008**
(21) Anmeldenummer: 06024829.1
(22) Anmeldetag: 30.11.2006
(51) Int. Cl.: G07C 5/00, B64F 5/00

(54) **Anordnung zur Dokumentation des Status von Removable Parts an Bord eines Luftfahrzeuges**

(71) Anmelder: Lufthansa Technik AG, 22335 Hamburg (DE)
(72) Erfinder: Muirhead, Andrew, 22848 Norderstedt (DE)
(74) Vertreter: Glawe, Delfs, Moll

(57) **Zusammenfassung**

Gegenstand der Erfindung ist eine Anordnung zur Dokumentation des Status von Removable Parts an Bord eines Luftfahrzeugs, bei der wenigstens ein Teil der Removable Parts mit einem passiven Speichermittel versehen ist, in das bzw. aus dem berührungslos Daten eingelesen bzw. ausgelesen werden können. Erfindungsgemäß sind folgende Merkmale vorgesehen:
a) an Bord des Luftfahrzeugs ist wenigstens eine Leseeinrichtung zum Auslesen von Daten aus den passiven Speichermitteln vorgesehen,
b) an Bord des Luftfahrzeugs ist wenigstens ein zentraler Speicher zum Speichern oder Zwischenspeichern der mittels der wenigstens einen Leseeinrichtung aus den passiven Speichermitteln ausgelesenen Daten vorgesehen,
c) an Bord des Luftfahrzeugs ist eine Übermittlungseinrichtung zum Übermitteln der Daten aus dem zentralen Speicher an einen außerhalb des Luftfahrzeugs angeordneten Speicher vorgesehen.

## Beschreibung

Die Erfindung betrifft eine Anordnung zur Dokumentation des Status von Removable Parts an Bord eines Luftfahrzeugs, bei der wenigstens ein Teil der Removable Parts mit einem passiven Speichermittel versehen ist, in das bzw. aus dem berührungslos Daten eingelesen bzw. ausgelesen werden können.

Austauschbare Flugzeugteile und technische Geräte an Bord eines Flugzeugs (sogenannte Removable Parts) müssen regelmäßig gewartet bzw. ausgetauscht werden. Solche Removable Parts sind mit einem sogenannten Label versehen, das wichtige Information zu diesem Removable Part optisch lesbar enthält.

Der Erfindung liegt die Aufgabe zugrunde, eine Anordnung bzw. ein System zu schaffen, das eine einfache und sichere Dokumentation des Status von Removable Parts an Bord eines Luftfahrzeugs ermöglicht.

Die erfindungsgemäße Anordnung ist gekennzeichnet durch folgende Merkmale:
a) an Bord des Luftfahrzeugs ist wenigstens eine Leseeinrichtung zum Auslesen von Daten aus den passiven Speichermitteln vorgesehen,
b) an Bord des Luftfahrzeugs ist wenigstens ein zentraler Speicher zum Speichern oder Zwischenspeichern der mittels der wenigstens einen Leseeinrichtung aus den passiven Speichermitteln ausgelesenen Daten vorgesehen,
c) an Bord des Luftfahrzeugs ist eine Übermittlungseinrichtung zum Übermitteln der Daten aus dem zentralen Speicher an einen außerhalb des Luftfahrzeugs angeordneten Speicher vorgesehen.

Zunächst seien einige im Rahmen der Erfindung verwendete Begriffe erläutert. Removable Parts sind sämtliche Teile an Bord eines Flugzeugs, die während des bestimmungsgemäßen Lebenszyklus des Flugzeugs für Wartungszwecke, Reparaturen oder zwecks Austausch des Teils aus- und/oder eingebaut werden. Erfindungsgemäß können alle oder ein Teil der Removable Parts mit dem noch zu erläuternden passiven Speichermittel versehen sein. Bei der Auswahl eines Teils der Removable Parts kann man sich beispielsweise konzentrieren auf komplexe und/oder wartungsintensive Removable Parts, beispielsweise elektrische und elektronische Geräte, die beispielsweise Navigations- und/oder Kommunikationszwecken dienen können oder zur sogenannten Kabinenausrüstung gehören und beispielsweise Unterhaltungszwecken dienen.

Diese Removable Parts sind mit einem passiven Speichermittel versehen, in das bzw. aus dem berührungslos Daten eingelesen und ausgelesen werden können. Ein passives Speichermittel ändert seinen Zustand (d.h. die darin gespeicherten Daten) nur durch Einwirkung von außen. Es besitzt keinerlei Einrichtungen zum selbständigen Ändern der darin aufgezeichneten Informationen. Bevorzugt ist es, wenn dieses passive Speichermittel zum Betrieb keine eigene Energiequelle benötigt.

Das berührungslose Ein- und Auslesen von Daten bedeutet, dass die in dem passiven Speichermittel gespeicherten Daten durch geeignete Lese- und Schreibeinrichtungen ausgelesen bzw. geändert werden können, die zu diesem Zweck mit dem Speichermittel keinen physischen Kontakt aufnehmen müssen. Besonders bevorzugt ist es, wenn das berührungslose Ein- bzw. Auslesen ohne Sichtkontakt zwischen passivem Speichermittel und Lese- bzw. Schreibeinrichtung erfolgen kann, also nicht auf optischem Wege erfolgt.

Erfindungsgemäß ist an Bord des Luftfahrzeugs wenigstens eine Leseeinrichtung zum Auslesen von Daten aus den passiven Speichermitteln vorgesehen. Diese Leseeinrichtung (bzw. mehrere Leseeinrichtungen) ist bzw. sind im Flugzeug vorzugsweise so installiert, dass sie ohne manuelles Eingreifen (beispielsweise umhergehen mit der Leseeinrichtung im Flugzeuginneren) vorzugsweise sämtliche passiven Speichermittel der Removable Parts auslesen können. Bei der erfindungsgemäßen Anordnung ist vorzugsweise eine solche Leseeinrichtung fest im Flugzeug installiert. Diese fest installierte Leseeinrichtung ist ausschließlich zum Auslesen von Daten aus den passiven Speichermitteln ausgebildet, sie soll die in den passiven Speichermitteln gespeicherten Daten nicht verändern.

Im Rahmen der Erfindung ist es auch möglich, dass die Leseeinrichtung manuell an den passiven Speichermitteln vorbeigeführt wird zum Auslesen der Daten. Dies kann beispielsweise immer dann erfolgen, wenn das Flugzeug am Gate parkt.

An Bord des Luftfahrzeugs ist wenigstens ein zentraler Speicher zum Speichern oder Zwischenspeichern mittels der wenigstens einen Leseeinrichtung aus den passiven Speichermitteln ausgelesenen Daten vorgesehen. "Zentral" bedeutet, dass dieser Speicher die ausgelesenen Daten aus den passiven Speichermitteln mehrerer Removable Parts an einem Speicherort zusammenfasst und für einen Zugriff bereitstellt.

Zwischenspeichern bedeutet, dass die ausgelesenen Daten in diesen Speicher lediglich so lange abgelegt werden, bis sie in einen außerhalb des Flugzeugs angeordneten Speicher (vorzugsweise am Boden) übermittelt werden können. Ein Zwischenspeicher kann entweder parallel sämtliche Daten erfassen oder aber nur sequenziell einen Teil der Daten, wenn das Auslesen von Daten aus den passiven Speichermitteln in den Zwischenspeicher und die Weiterübertragung an den außerhalb des Flugzeugs angeordneten Speicher parallele und/oder einander überlappende Vorgänge sind.

Speichern bedeutet, dass die Daten in dem zentralen Speicher über einen längeren Zeitraum vorgehalten werden, beispielsweise bis zum nächsten Auslesen auf einen externen Speicher außerhalb des Luftfahrzeugs im Rahmen einer Wartung. Der zentrale Speicher kann so ausgebildet sein; dass nach der Übermittlung der darin gespeicherten Daten an einen externen Speicher die entsprechenden Daten aus dem zentralen Speicher gelöscht werden. Alternativ kann der zentrale Speicher die entsprechenden Daten aus mehreren Auslesevorgängen von Daten aus den passiven Speichermitteln kumulieren und somit eine Zustandshistorie der entsprechenden Removable Parts speichern.

Die passiven Speichermittel sind vorzugsweise RFID (Radio Frequency Identification) tags. RFID tags sind im Stand der Technik bekannt und ermöglichen das dauerhafte Speichern darauf mittels geeigneter elektromagnetischer Schreibeinrichtungen geschriebenen Daten. Die gespeicherten Daten können Teilenummer, Seriennummer, Modifikationszustand, Herstell-, Installations- und Wartungsdaten, die Versionsnummer von auf dem Removable Part etwaig installierter Software und dergleichen umfassen. Der RFID tag ist bevorzugt eingebettet in das Teilelabel, so dass beim Herstellvorgang des Removable Part vorzugsweise gleichzeitig Informationen auf das Teilelabel geschrieben und in das passive Speichermittel eingelesen werden können. Die auf dem passiven Speicher befindlichen Informationen sind vorzugsweise in digitaler Form gespeichert, weiter vorzugsweise verschlüsselt, beispielsweise durch eine 128 Bit Verschlüsselung. Die Speicherkapazität des digitalen passiven Speichermittels kann beispielsweise 300 bis 500 Bytes betragen.

Das Einlesen von Daten in die passiven Speichermittel geschieht vorzugsweise erstmalig im Zuge des Herstellvorgangs des Removable Part, weitere Einlesevorgänge können vorgenommen werden bei jeder Wartung und/oder Modifikation des entsprechenden Removable Part. Auf diese Art und Weise enthält das passive Speichermittel eine zu jedem Zeitpunkt aktuelle Historie sowie den Ist-Zustand des Removable Part.

An Bord des Luftfahrzeugs ist eine Übermittlungseinrichtung zum Übermitteln der Daten aus dem zentralen Speicher an einen außerhalb des Luftfahrzeugs angeordneten Speicher vorgesehen. Eine solche Übermittlungseinrichtung kann drahtgebunden funktionieren, beispielsweise durch eine entsprechende Leitungsverbindung, wenn das Flugzeug am Gate parkt.

Bevorzugt handelt es sich jedoch um eine drahtlose Verbindung, die übliche Standardfunkübertragungsprotokolle wie beispielsweise Mobilfunkprotokolle (UMTS oder GPRS) oder aber da W-Lan Protokoll nutzen kann. Bei der Datenübermittlung können ebenfalls genormte Protokolle wie beispielsweise das IP-Protokoll verwendet werden.

Die bevorzugte Verschlüsselung der in den passiven Speichermitteln gespeicherten Daten verhindert das unbefugte Auslesen und insbesondere das unbefugte Manipulieren dieser Daten.

Bei einer besonders bevorzugten Ausführungsform der Erfindung ist die Leseeinrichtung an Bord des Luftfahrzeugs zum automatischen Auslesen der passiven Speichermittel in definierten Betriebszuständen des Luftfahrzeugs konfiguriert. Automatisches Auslesen bedeutet, dass der Lesevorgang von der wenigstens einen Leseeinrichtung ohne manuellen Eingriff (wie beispielsweise manuelles Vorbeiführen eines Lesegeräts an den Removable Parts) erfolgt und vorzugsweise in definierten Betriebszuständen automatisch ausgelöst wird. Ein solcher definierter Betriebszustand kann beispielweise das Ausrollen des Flugzeugs nach jeder Landung sein. Dass im Hinblick auf die elektromagnetische Verträglichkeit der Bordelektronik kritische Auslesen von RFID tags mit aktiv elektromagnetische Strahlung aussendenden Lesegeräten wird nicht während des im Hinblick auf die EMI Verträglichkeit kritischen Flugzustands durchgeführt, sondern im vergleichsweise problemlosen Zustand des Ausrollens nach der Landung vor dem Andocken am Gate. Diese Vorgehensweise hat den großen Vorteil, dass während des Flugzeugbetriebs laufend (nach jeder Landung) ein vollständiges Bild des Ist-Zustandes der Removable Parts erfasst und gespeichert wird. Dies erlaubt eine vollständige und lückenlose Erfassung der Zustands- und Wartungshistorie des Flugzeugs. Dieser Ist-Zustand nach jeder Landung kann dann im zentralen Speicher des Flugzeugs abgelegt und/oder auf einen externen Rechner übertragen und ggf. weiter ausgewertet werden.

Besonders bevorzugt ist es, wenn der zentrale Speicher des Luftfahrzeugs zusätzlich mit Mitteln zum Erfassen von Betriebs- und/oder Flugdaten des Luftfahrzeugs verbunden ist. Hier kann es sich um Daten wie beispielsweise die Flugstunden, Betriebsdaten der Triebwerke und/oder von Teilen der Kabinenausrüstung und dergleichen handeln. Eine solche Verknüpfung von aus den passiven Speichermitteln ausgelesenen Daten und sonstigen Betriebs- und/oder Flugdaten des Flugzeugs ist besonders wertvoll, da in vielen Fällen eine Garantie auf Flugzeuge und deren Ausrüstung für eine bestimmte Zahl von Flugstunden gewährt wird. Die erfindungsgemäß vorgesehene Verknüpfung von RFID-Daten und sonstigen Flugdaten und die laufende Dokumentation (beispielsweise bei jedem Ausrollvorgang nach der Landung) stellt eine sichere und nachvollziehbare Datenbasis zur Verfügung, aus der abgeleitet werden kann, ob beispielsweise im Schadenfall ein bestimmtes Removable Part nach der Herstellung oder seiner letzten Wartung sich noch im Gewährleistungsintervall befindet oder nicht.

Das vorgesehene automatische Auslesen von RFID-Daten und deren Verknüpfung mit Flugdaten führt dazu, dass die bisher sehr aufwendig manuell zu erstellende Dokumentation über die Konfiguration eines Flugzeugs praktisch vollständig automatisch erstellt und ausgewertet werden kann.

Werden nach der Landung Removable Parts ausgetauscht, so wird diese Änderung des Status bzw. der Konfiguration des Flugzeugs automatisch bei der nächsten RFID-Abfrage (also nach der nächsten Landung des Flugzeugs) erfasst und gespeichert. Die entsprechenden RFID-Abfragen können auch häufiger vorgesehen sein, beispielsweise auch bei jedem Rollen vor dem Start eines Flugzeugs.

Im zentralen Speicher und/oder einem externen Speicher außerhalb des Flugzeugs erfolgt vorzugsweise eine Verknüpfung der RFID-Daten und der zusätzlichen Flugdaten der Gestalt, das eine Datenbank erstellt wird, in der für jedes mit einem passiven Speichermittel versehenen Removable Part für dessen Betrieb relevante Betriebs- und/oder Flugdaten gespeichert sind. Beim Erstellen dieser Datenbank wird der Speicherinhalt der passiven Speichermittel an den Removable Part selber nicht verändert. Dies geschieht lediglich bei einer Wartung oder einem Austausch des entsprechenden Removable Part.

Im Zuge der Herstellung des Removable Part können beispielsweise alle unveränderlichen Informationen zu dem Removable Part auf dem RFID-tag gespeichert werden. Dies sind beispielsweise Teilenummer, Seriennummer, Herstellungsdatum und dergleichen. Beim Einbau des Removable Part in das Flugzeug wird dann der RFID-tag noch einmal beschrieben, beispielsweise mit dem Einbaudatum. Dies geschieht durch den den Removable Part einbauenden Techniker mit Hilfe eines entsprechenden mobilen Schreibgeräts.

Ein Servicetechniker wird mit diesem Schreibgerät immer dann Aktualisierungen der Informationen auf dem RFID Chip vornehmen, wenn der Removable Part zu Wartungszwecken aus dem Flugzeug entfernt wird, Wartungs- oder Reparaturarbeiten daran vorgenommen werden, eine neue Software aufgespielt wird, der Removable Part wieder eingebaut wird oder dergleichen.

Unabhängig von der Aktualisierung von Daten auf dem einzelnen RFID Chip jedes Removable Part ermöglichen die bevorzugten Ausführungsformen der Erfindung ein automatisches Erfassen der Gesamtkonfiguration des Flugzeugs zu vorgegebenen Zeitpunkten.

Bei einer bevorzugten Ausführungsform der Erfindung ist der zentrale Speicher des Luftfahrzeugs als Datenbankserver ausgebildet. Dies bedeutet, dass er autonom die Datenbankinformation aufbereitet und für einen externen Zugriff zur Verfügung stellt. Der Datenbankserver kann als Webserver ausgebildet sein, mittels dem die entsprechenden Informationen im Internet zugänglich gemacht werden können.

Dieser Webserver kann außer den aus den passiven Speichermitteln ausgelesenen Daten sämtliche für die Wartung oder sonstige Zwecke relevanten Daten des Flugzeugs (so auch Flug- und Betriebsdaten) an Bord sammeln, aufbereiten und abrufbereit zur Verfügung stellen. Der Webserver ab Bord des Flugzeugs ist über einen sogenannten Mobile Access Router und dessen je nach Betriebszustand des Flugzeugs verfügbaren Verbindungen zeitweise mit dem Internet verbunden. Ein solcher Mobile Access Router prüft automatisch, ob und ggf. welche Verbindungen für einen Zugang zum Internet verfügbar sind. Im Flugbetrieb können dies beispielsweise Sattelitenverbindungen sein, am Boden können dies alternativ oder zusätzlich Mobilfunkverbindungen sein (beispielsweise UMTS oder GPAS-Verbindungen), W-Lan Verbindungen oder drahtgebundene Verbindungen am Gate.

Da das Flugzeug nicht permanent mit dem Internet verbunden sein kann, kann der Webserver keine feste IP-Adresse besitzen. Sobald das Flugzeug mit dem Internet verbunden ist, wird daher zunächst über einem im Stand der Technik bekannten DNS to go server dem Webserver des Flugzeugs eine IP-Adresse zugewiesen und das Flugzeug ist von diesem Moment an unter seiner Domain im Internet sichtbar.

Zur Auswertung der Wartungsdaten ist am Boden jetzt keine weitere Infrastruktur erforderlich. Über jeden Internetzugang kann (nach entsprechender Autorisierung) auf das Flugzeug zugegriffen und die an Bord auf dem Webserver gesammelten und aufbereiteten Daten ausgelesen werden.

Die Erfindung ermöglicht es somit, dass der aktuelle Status eines Flugzeugs über das Internet abrufbar ist. Zur Vorbereitung einer Wartung des Flugzeugs kann der aktuelle Status somit über jeden Internetzugang.abgefragt und eine entsprechende Dokumentation gelesen bzw. bei Bedarf noch erstellt werden.

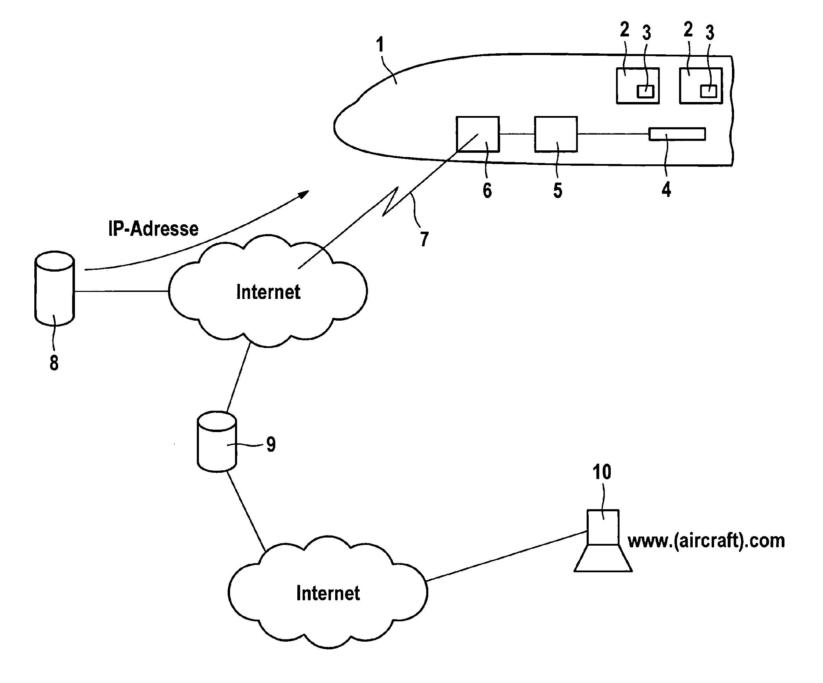

Ein Ausführungsbeispiel der Erfindung wird im folgenden anhand der Zeichnung erläutert.

In einem schematisch bei 1 dargestellten Flugzeug sind verschiedene Removable Parts 2 angeordnet, die jeweils mit einem RFID-tag 3 versehen sind. Auf dem RFID-tag 3 sind relevante Informationen über das Removable Part 2 wie beispielsweise Teilenummer, Seriennummer, Herstelldatum, Einbaudatum, Wartungsdaten, Konfigurationsdaten, Versionsnummern der aufgespielten Software (falls relevant) etc. gespeichert. Ein Einlesen bzw. Verändern der gespeicherten Informationen kann nur von autorisierten Personen mit speziellen RFID-Schreibeinrichtungen erfolgen, die die für die Speicherung gewählte Verschlüsselung beherrschen.

Im Flugzeug eingebaut ist eine RFID-Leseeinrichtung 4. Mit Hilfe dieser aktiven Leseeinrichtung 4 können die Daten aus den RFID-tags 3 ausgelesen werden. Aktiv bedeutet, dass diese RFID-Leseeinrichtung 4 elektromagnetische Strahlung aussendet und dabei mit den RFID-tags 3 wechselwirkt und so die darauf gespeicherten Informationen ausliest. Dies ist im Stand der Technik bekannt.

Die Reichweite üblicher RFID-Leseeinrichtungen beträgt etwa 2 bis 3 m. Dies bedeutet, dass in der Praxis bei über größere Bereiche des Flugzeugs verteilten Removable Parts 2 die Anordnung mehrerer RFID-Lesegeräte 4 im Flugzeug erforderlich sein kann. Vorzugsweise sollen diese RFID-Lesegeräte 4 sämtliche RFID-tags.3 der Removable Parts 2 auslesen können, ohne dass sie manuell bewegt oder dergleichen werden müssen.

Die RFID-Leseeinrichtung 4 ist verbunden mit einem als Webserver ausgebildeten Datenbankserver 5. Der Webserver 5 ist verbunden mit einem sogenannten Mobile Access Router 6. Dieser Mobile Access Router konfiguriert eine Verbindung des Webservers 5 mit dem Internet über verschiedene Verbindungen je nach deren Verfügbarkeit. Im Flugbetrieb kann der Mobile Access Router 6 beispielsweise eine Internetverbindung über ein Sattelitennetzwerk herstellen. Am Boden kann dies über Mobilfunknetze, W-Lan oder auch über kabelgebundene Verbindungen erfolgen. Der Mobile Access Router 6 prüft permanent, welche Verbindungsmöglichkeiten zur Verfügung stehen und wählt die insbesondere anhand der Kriterien Kosten und benötigte Bandbreite aus.

Bei 7 ist die über den Mobile Access Router 6 hergestellte (in der Regel drahtlose) Verbindung mit dem Internet angedeutet.

Der Webserver 5 ist zusätzlich mit verschiedenen an Bord des Flugzeugs befindlichen Sensoren sowie Steuer- und Kontrolleinrichtungen verbunden, um alle relevanten Betriebszustände und -parameter des Flugzeugs zu erfassen.

Bei jedem Rollen des Flugzeugs vor dem Start und nach einer Landung aktiviert der Datenbankserver 5 die RFID-Leseeinrichtung 4 und liest die RFID-tags 3 aus. Die entsprechenden ausgelesenen Informationen werden im Datenbankserver 5 gespeichert. Das Rollen vor dem Start bzw. nach der Landung bietet sich als Zeitpunkt für das Auslesen der RFID-tags an, da zum einen kein im Hinblick auf die elektromagnetische Verträglichkeit kritischer Betriebszustand (Flugbetrieb) vorliegt und zum anderen während des Rollens nicht die Möglichkeit besteht, dass Wartungsarbeiten vorgenommen und dabei möglicherweise die Konfiguration verändert wird, während der Auslesevorgang durchgeführt wird. Ist vor dem Start ein Removable Part 2 gewartet oder ausgetauscht worden, wird diese Änderung der Konfiguration des Flugzeugs während des Rollens vor dem Start erfasst und im Datenbankserver 5 gespeichert.

Der Datenbankserver 5 verknüpft die aus den RFID-tags 3 ausgelesenen Daten mit den Flugdaten, so dass sich in der Datenbank für jedes Removable Part beispielsweise dessen geflogene Flugstunden speichern und auslesen lassen.

Auf dem Server 5 wird somit eine Datenbank vorgehalten, die alle für Dokumentations- und Wartungszwecke erforderlichen Daten der mit RFID-tags 3 versehenen Removable Parts 2 enthält.

Der Datenbankserver 5 ist als Webserver ausgebildet, über das Internet können somit sämtliche dort zur Verfügung gestellten Daten abgerufen werden. Zu diesem Zweck ist der Datenbankserver 5 über den mobile access router 6 und die bei 7 angedeutete Verbindung (beispielsweise Satcom-Verbindung) mit dem Internet verbunden. Da die Verbindung mit dem Internet nicht permanent sein kann, kann der Webserver 5 keine feste IP-Adresse aufweisen. Sobald eine Internetverbindung besteht, bekommt der Webserver 5 über den Hauserver 8 des Internetproviders eine IP-Adresse zugewiesen, der sogenannte DNS to go server 9 verknüpft diese IP-Adresse mit der Domain des Flugzeugs. Unter dieser Domain ist das Flugzeug jetzt von jedem mit dem Internet verbundenen Computer 10 aus zugänglich. Entsprechende Sicherheitsmechanismen sind vorgesehen, damit nur autorisierte Personen sich in den Webserver 5 einloggen können.

Zum Zwecke der Dokumentation des Zustands des Flugzeugs beispielsweise für Aufsichtsbehörden oder vor einer Wartung. Die Wartung kann so genau geplant und erforderliche Ersatzteile können bestellt und bereitgestellt werden.

## Patentansprüche

1. Anordnung zur Dokumentation des Status von Removable Parts an Bord eines Luftfahrzeugs, bei der wenigstens ein Teil der Removable Parts mit einem passiven Speichermittel versehen ist, in das bzw. aus dem berührungslos Daten eingelesen bzw. ausgelesen werden können, **gekennzeichnet durch** folgende Merkmale:
a) an Bord des Luftfahrzeugs ist wenigstens eine Leseeinrichtung zum Auslesen von Daten aus den passiven Speichermitteln vorgesehen,
b) an Bord des Luftfahrzeugs ist wenigstens ein zentraler Speicher zum Speichern oder Zwischenspeichern der mittels der wenigstens einen Leseeinrichtung aus den passiven Speichermitteln ausgelesenen Daten vorgesehen,
c) an Bord des Luftfahrzeugs ist eine Übermittlungseinrichtung zum Übermitteln der Daten aus dem zentralen Speicher an einen außerhalb des Luftfahrzeugs angeordneten Speicher vorgesehen.

2. Anordnung nach Anspruch 1, **dadurch gekennzeichnet, dass** die passiven Speichermittel RFID-Tags sind.

3. Anordnung nach Anspruch 1 oder 2, **dadurch gekennzeichnet, dass** die Leseeinrichtung an Bord des Luftfahrzeugs zum automatischen Auslesen der passiven Speichermittel in definierten Betriebszuständen des Luftfahrzeugs konfiguriert ist.

4. Anordnung nach Anspruch 3, **dadurch gekennzeichnet, dass** die definierten Betriebszustände das Ausrollen nach einer Landung umfassen.

5. Anordnung nach einem der Ansprüche 1 bis 4, **dadurch gekennzeichnet, dass** der zentrale Speicher des Luftfahrzeugs zusätzlich mit Mitteln zum Erfassen von Betriebs- und/oder Flugdaten des Luftfahrzeugs verbunden ist.

6. Anordnung nach Anspruch 5, **dadurch gekennzeichnet, dass** die Betriebs- und/oder Flugdaten die Flugstunden umfassen.

7. Anordnung nach Anspruch 1 oder 2, **dadurch gekennzeichnet, dass** der zentrale Speicher des Luftfahrzeugs und/oder ein außerhalb des Luftfahrzeugs angeordneten Speicher zum Erstellen einer Datenbank ausgebildet ist, in der für jedes mit einem passiven Speichermittel versehenen Removable Part für dessen Betrieb relevante Betriebs- und/oder Flugdaten gespeichert sind.

8. Anordnung nach einem der Ansprüche 1 bis 4, **dadurch gekennzeichnet, dass** der zentrale Speicher des Luftfahrzeugs als Datenbankserver ausgebildet ist.

9. Anordnung nach Anspruch 5, **dadurch gekennzeichnet, dass** der Datenbankserver als Webserver ausgebildet ist.
